# EUROPEAN PATENT APPLICATION

(11) **EP 4 279 888 A1**
(43) Date of publication of application: **22.11.2023**
(21) Application number: 23173092.0
(22) Date of filing: 12.05.2023
(51) Int. Cl.: G01K 3/04, G01K 11/06, G01K 11/12

(54) **DEVICE FOR MONITORING THE QUALITY OF FROZEN PRODUCTS**

(30) Priority: 16.05.2022 IT 202200010094
(71) Applicant: Presti Rita, 90135 Palermo (PA) (IT)
(72) Inventor: PRESTI, RITA, 90135 PALERMO (PA) (IT)
(74) Representative: Giuliano, Natalia

(57) **Abstract**

Device (100, 200) for monitoring the quality of frozen products comprising at least one plastic strip (100a, 200a) consisting of two heat-sealed plastic sheets so as to form at least a first tank (101a, 201a) containing a first frozen colored liquid (101b, 201b), characterized in comprising a second tank (102a) adjacent to the first tank (101a) and containing a second frozen colored liquid (102b), the first colored liquid (101b) and the second colored liquid (102b) respectively comprise a primary type food coloring of a first color and a primary type food coloring of a second color.

## Description

The present invention relates to a device for monitoring the quality of frozen products.

In particular, the present invention relates to a device for monitoring the quality of frozen products, of the type used in the frozen and deep-frozen food sector.

As is known, frozen products are subject to the Cold Chain, i.e., to follow specific regulations for reaching and maintaining the freezing temperature. Therefore, the need to have available temperature/time indicators capable of highlighting to the consumer any exceeding of the temperature for a certain period of time is increasing, so as to avoid consuming foods that have undergone a change in temperature of the Cold chain. (Known indicators are labels inside which there are temperature sensors and metal and electronic components which signal when the temperature at which the frozen products are kept is exceeded for a certain time).

However, the devices for quality control of frozen products known suffer from the problem of not being precise and rapid enough and of not being able to guarantee the end user whether the product has been defrosted at temperatures above 0°C and refrozen with a 100% guarantee.

The object of the present invention is to provide a device for monitoring the quality of frozen products which is precise and rapid as well as simple and economical and adjustable with temperatures close to 0°C, having characteristics such as to overcome the limits which still affect the devices present on the market, previously described with reference to the prior art).

According to the present invention, a device for monitoring the quality of frozen products is provided, as defined in claim 1.

For a better understanding of the present invention, a preferred embodiment is now described, purely by way of nonlimiting example, with reference to the attached drawings, in which:
- figure 1 shows a schematic view of a first embodiment of a device for monitoring the quality of frozen products, according to the invention;
- figure 2 shows a schematic view of the first embodiment of the device for monitoring the quality of frozen products in a first thawing phase, according to the invention;
- figure 3 shows a schematic view of the first embodiment of the device for monitoring the quality of frozen products in a second thawing phase, according to the invention;
- figure 4 shows a schematic view of the first embodiment of the device for monitoring the quality of frozen products in a fourth thawing step, according to the invention;
- figure 5 shows a schematic view of the first embodiment of the device for monitoring the quality of frozen products in a fifth and final thawing phase, according to the invention;

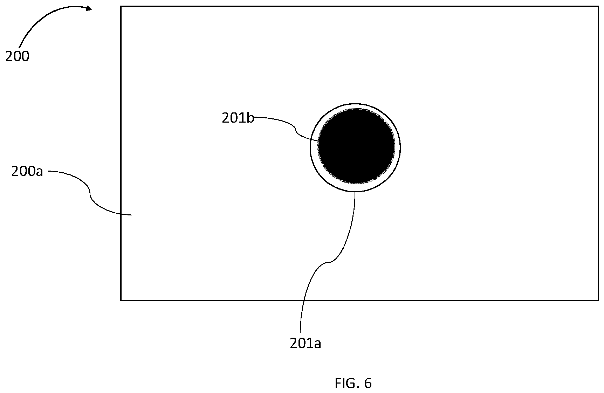

- figure 6 shows a schematic view of a second embodiment of the device for monitoring the quality of frozen products, according to the invention;
- figure 7 shows a schematic view of the second embodiment of the device for monitoring the quality of frozen products, in a first thawing phase, according to the invention;
- figure 8 shows a schematic view of the second embodiment of the device for monitoring the quality of frozen products, in a second thawing phase, according to the invention;
- figure 9 shows a schematic view of the second embodiment of the device for monitoring the quality of frozen products, in a complete thawing phase, according to the invention;
- Figure 10 shows a schematic view of a frozen product comprising the second embodiment of the device for monitoring the quality of frozen products, according to the invention;
- figure 11 shows a schematic view of a frozen product comprising the second embodiment of the device for monitoring the quality of frozen products in a complete thawing phase, according to the invention.

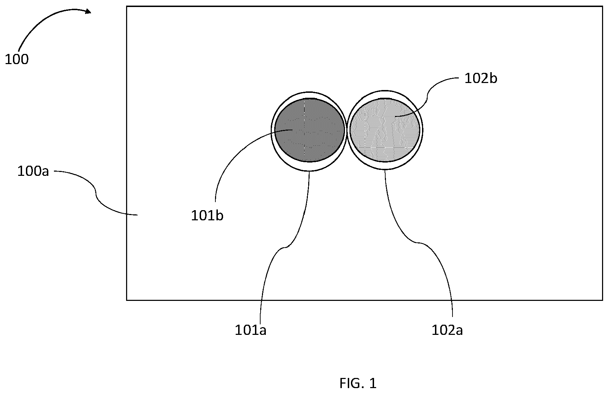

With reference to these figures and, in particular to figure 1, a device for monitoring the quality of frozen products is shown, according to the invention. In particular, the device for monitoring the quality of frozen products 100 comprises a plastic strip 100a consisting of two heat-sealed plastic sheets so as to form a first tank 101a containing a first colored liquid 101b frozen from -1°C to -24°C and a second tank 102a containing a second colored liquid 102b frozen from -1°C to -24°C.

According to one aspect of the invention, the plastic strip 100a has the shape of a square with dimensions greater than or equal to 9cm x 9cm.

According to another aspect of the invention, the plastic strip 100a has the shape of a circle with a diameter greater than or equal to 9 cm.

According to one aspect of the invention, the first and second colored liquids respectively comprise a primary-type food colorant of a first color and a primary-type food colorant of a second color.

According to another aspect of the invention, the plastic strip is an adhesive strip which can be applied to the package of the frozen product to be monitored.

According to one aspect of the invention, the plastic material of the strip is polypropylene.

According to another aspect of the invention, the primary food coloring of the first colored liquid is blue in color.

According to another aspect of the invention, the primary food coloring of the second colored liquid is yellow in colour.

According to one aspect of the invention, each tank 101a, 102a comprises 0.05 g of dyes for every 2.5 liters of drinking water.

According to another aspect of the invention, each tank 101a, 102a has a thickness of 0.5 cm and a diameter of 3 cm.

According to one aspect of the invention, the tank 101a, 102a comprises 5 ml of liquid and has an area between 2 cm² and 5 cm².

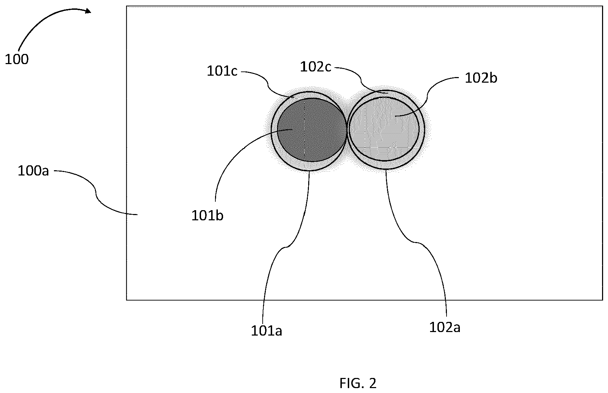

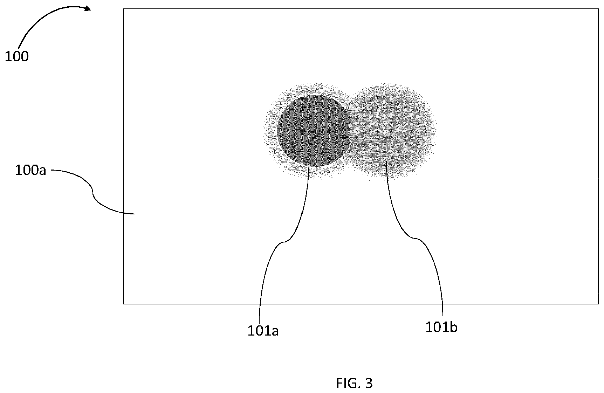

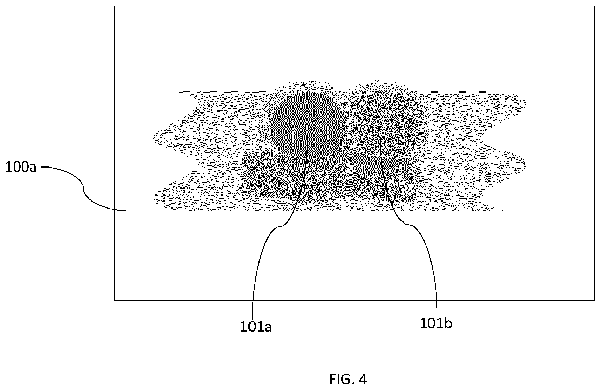

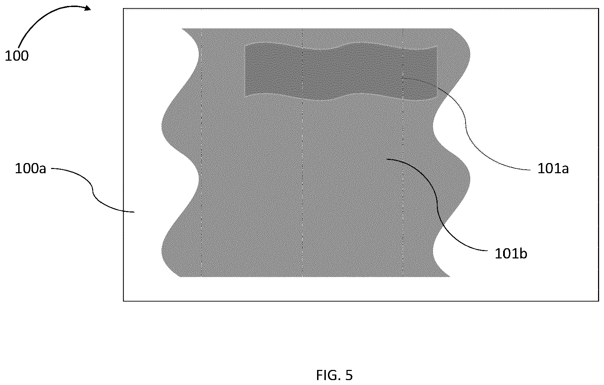

In use, the food liquids are frozen, each inside its own tank, and the separation membrane between the two tanks breaks, allowing the two liquids to mix when they undergo defrosting. If the temperature of the cold chain undergoes an increase, they mix highlighting a composite color, in particular the green obtained from the mixture of blue and yellow, indicating the interruption of the cold chain for a time greater than 20 minutes at a temperature of 1°C. When the thawing of a frozen product on which the device 100 is affixed begins, the colored liquids 101b and 102b also thaw and begin to mix by invading an area 101c and 102c of the plastic strip 100a, as shown in figure 2. The mixing of the two liquids continues as the defrosting progresses, as shown in figures 3 and 4, in which it is evident that the colored liquids invade increasingly larger areas of the plastic strip 100a, until the cubes of colored liquid are completely dissolved and spread throughout the plastic strip 100a, as shown in figure 5.

According to a second embodiment of the invention, the device 200 for monitoring the quality of frozen products comprises a plastic strip 200a consisting of two plastic sheets glued together so as to form a single tank 201a containing a frozen colored liquid, preferably black.

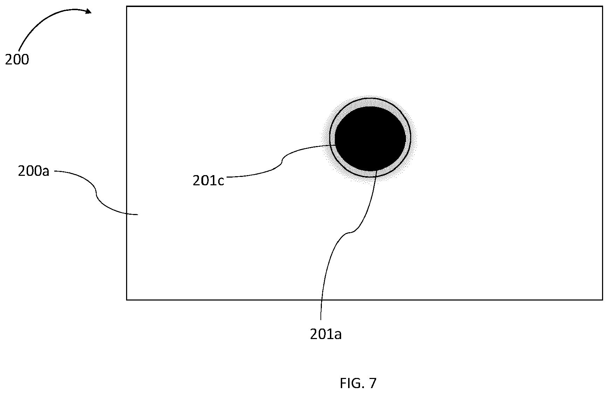

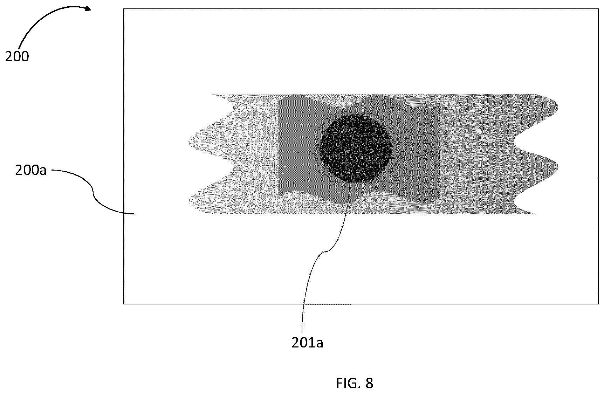

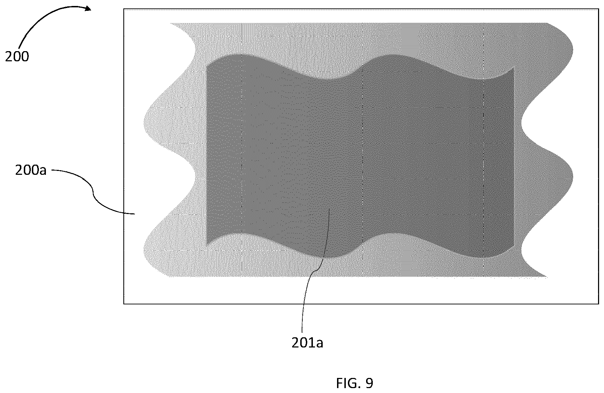

When the thawing of the product begins, the black liquid begins to expand in the region 201c, as shown in Figure 7. As the thawing continues, the mixing region of the liquid increases, as shown in Figure 8, until it almost completely invades the plastic strip 200, as shown in figure 9.

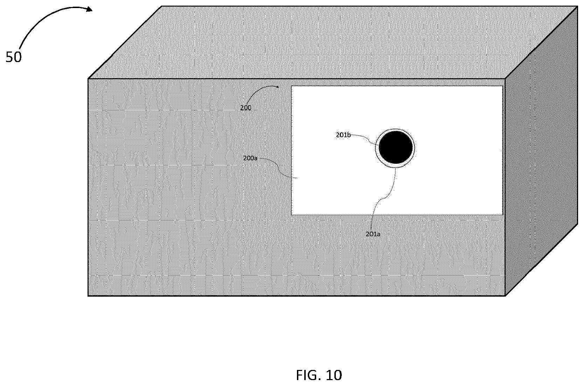

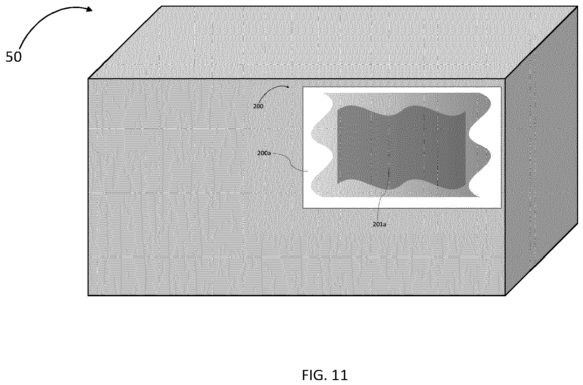

As shown in Figure 10, the device for monitoring the quality of frozen products, for example its embodiment 200 can be applied and integrated in the package of a frozen product 50. Once the product 50 has been defrosted, due to external causes such as interruption of cold chain due to a lack of electricity, the device 200 will make it fully visible to the end user that the product 50 has suffered an interruption in the cold chain, as shown in figure 11.

Therefore, the device for monitoring the quality of frozen products according to the invention is simple.

Another advantage of the device for monitoring the quality of frozen products according to the invention is that it is economical.

Finally, the device for monitoring the quality of frozen products according to the invention is 100% safe.

Finally, it is clear that modifications and variations can be made to the device for monitoring the quality of frozen products described and illustrated here without thereby departing from the protective scope of the present invention, as defined in the attached claims.

## Claims

1. Device (100, 200) for monitoring the quality of frozen products comprising at least one plastic strip (100a, 200a) consisting of two heat-sealed plastic sheets so as to form at least a first tank (101a, 201a) containing a first frozen colored liquid (101b, 201b), **characterized in** comprising a second tank (102a) adjacent to the first tank (101a) and containing a second frozen colored liquid (102b), the first colored liquid (101b) and the second colored liquid (102b) respectively comprise a primary type food coloring of a first color and a primary type food coloring of a second color.

2. Device (100, 200) according to claim 1, **characterized in that** the primary type food coloring of the first frozen colored liquid (101b) is blue and the primary type food coloring of the second frozen colored liquid (102b) is yellow.

3. Device (100, 200) according to claim 1, **characterized in that** the first frozen colored liquid (201b) is black in color.

4. Device (100, 200) according to the preceding claims, **characterized in that** the plastic strip (100a) is an adhesive strip applicable to the packaging of a frozen product to be monitored.

5. Device (100, 200) according to the preceding claims, **characterized in that** the plastic strip is made of polypropylene.

6. Device (100, 200) according to the preceding claims, **characterized in that** each tank (101a, 201a, 102a) comprises at least 0.05 g of colorings per 2.5 liters of drinking water.

7. Device (100, 200) according to the previous claims, **characterized in that** it comprises at least 5 ml of liquid and has an area between 2 cm² and 5 cm².

8. Frozen product comprising a device (100, 200) for monitoring the quality of frozen products according to claims 1-7.
